(19)

Europäisches
Patentamt
European
Patent Office
Office européen
des brevets

(11) **EP 4 421 905 A1**

(12) **EUROPEAN PATENT APPLICATION**
published in accordance with Art. 153(4) EPC

(43) Date of publication:
**28.08.2024 Bulletin 2024/35**

(21) Application number: **21962113.3**

(22) Date of filing: **17.11.2021**

(51) International Patent Classification (IPC):
*H01M 4/36* (2006.01)    *H01M 4/525* (2010.01)
*H01M 4/131* (2010.01)    *H01M 10/0525* (2010.01)

(52) Cooperative Patent Classification (CPC):
Y02E 60/10

(86) International application number:
**PCT/CN2021/131284**

(87) International publication number:
**WO 2023/070769 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.10.2021 PCT/CN2021/126213**

(71) Applicant: **Ningde Amperex Technology Limited
Ningde, Fujian 352100 (CN)**

(72) Inventor: **ZHOU, Molin
Ningde, Fujian 352100 (CN)**

(74) Representative: **Icosa
83 avenue Denfert-Rochereau
75014 Paris (FR)**

(54) **POSITIVE ELECTRODE, PREPARATION METHOD THEREFOR, AND LITHIUM ION SECONDARY BATTERY**

(57) This application discloses a positive electrode, a preparation method thereof, and a lithium-ion secondary battery. The positive electrode includes a first positive electrode material and a second material. The first positive electrode material includes any one of substances represented by formula I; and the second material includes any one of substances represented by formula II, where the second material includes a phase B belonging to an F-3m1 space group. The positive electrode disclosed in this application includes the first positive electrode material and the second material. The first positive electrode material has good cycling stability and high initial coulombic efficiency, and the second material has high initial charge specific capacity and low initial coulombic efficiency, so the combination of the two materials can compensate for the loss of active lithium caused by formation of a SEI. In addition, the second material undergoes a phase transition to an R-3m phase after releasing excess lithium, and thus becomes an active material, increasing energy density of the secondary battery.

FIG. 1

EP 4 421 905 A1

**Description**

**TECHNICAL FIELD**

This application relates to the field of battery positive electrode materials, and in particular, to a positive electrode, a preparation method thereof, and a lithium-ion secondary battery.

**BACKGROUND**

During first-cycle charging and discharging of the lithium-ion secondary battery, a solid electrolyte interface (SEI) is formed on the surface of the negative electrode, which causes irreversible capacity loss, decreasing the energy density of the lithium-ion energy storage device. In the devices using a graphite negative electrode, about 10% of the active lithium sources are consumed in the first cycle. When the negative electrode materials with high specific capacity such as alloy (silicon, tin, and the like), oxide (silicon oxide and tin oxide), and amorphous carbon negative electrodes are used, more active lithium sources are consumed. Therefore, an appropriate lithiation method is of great significance for further increasing the energy density of the lithium-ion secondary battery.

In the prior art, compared with lithiation to the negative electrode that causes various problems, the method of lithiation to the positive electrode that is safer and easier to operate has gained increasing attention in the industry. For example, a positive electrode lithiation material based on lithium-oxygen compounds, lithium sources, and alkyl lithium is disclosed in the prior art, and $Li_2NiO_2$ lithiation materials are also used for lithiation in the prior art.

**SUMMARY**

This application discloses a positive electrode. The positive electrode includes a first positive electrode material and a second material. The first positive electrode material has good cycling stability and high initial coulombic efficiency, and the second material has high initial charge specific capacity and low initial coulombic efficiency, so the two materials can compensate for the loss of active lithium caused by formation of a SEI. In addition, the second material undergoes a phase transition to an R-3m phase after releasing excess lithium, and thus serves as an active material in subsequent cycles, increasing energy density of a secondary battery.

A positive electrode is provided, where the positive electrode includes a first positive electrode material and a second material;

the first positive electrode material including any one of substances represented by formula I:

$$Li_{1+x}Co_{1-y}M^1_yO_{2-t}A_t \qquad \text{formula I,}$$

where
in formula I, $M^1$ includes at least one of Ni, Mn, Al, Mg, Ti, Zr, La, Y, Fe, Cr, V, Zn, Ru, Rh, Ga, Pd, Pt, Mo, W, Sb, Nb, Se, Te, or Ce;
A includes at least one of S, N, F, Cl, or Br; and
$-0.1 \leq x \leq 0.2$, $0 \leq y \leq 0.2$, and $0 \leq t \leq 0.2$; and
the second material including any one of substances represented by formula II:

$$Li_{1+r}Ni_{1-p-q}M^2_pM^3_qO_{2-s}D_s \qquad \text{formula II,}$$

where
in formula II, $M^2$ and $M^3$ independently include at least one element of Co, Mn, Fe, Ti, Al, V, Cr, Nb, Zr, La, or Y, and $M^2$ and $M^3$ are different elements;
D includes at least one element of S, N, F, Cl, or Br; and
$0 < r \leq 1$, $0 < p < 1$, $0 < q < 1$, $0 < p+q \leq 0.5$, and $0 \leq s < 0.2$;
where the second material includes a phase B belonging to an F-3m1 space group.

Specifically, the second material needs to have the phase B, as only the phase B can provide an additional charge specific capacity. The phase B undergoes a phase transition to a phase A after releasing excess lithium. The second material can be used as a lithiation material and needs to have high initial charge specific capacity and low initial coulombic efficiency.

Lithiation is based on the premise that a positive electrode has higher initial coulombic efficiency than a negative electrode, so some of positive electrode materials are not fully utilized. In this application, the first positive electrode material is not fully utilized. To fully utilize the first positive electrode material (that is, to increase energy density), lithiation is required for the first positive electrode material. In this application, the second material is used for lithiation, which needs to have high initial charge specific capacity and low initial coulombic efficiency. Only the second material meeting this requirement can be combined with the first positive electrode material, otherwise the effect of lithiation cannot be achieved. In addition, the second material is rather special and can be used as an active material (that is, the phase A) in subsequent cycles after lithium is released, thereby further increasing the energy density.

Optionally, in the first positive electrode material, $M^1$ includes at least one of Ni, Mn, Al, Mg, Ti, Zr, La, Y, Fe, Cr, V, Zn, or Rh; and/or A includes at least one of S or F; and/or $-0.05 \leq x \leq 0.1$; and/or $0 \leq y \leq 0.1$.

Optionally, in the second material, $M^2$ and $M^3$ independently include at least one of Co, Mn, or Al; and/or D includes at least one of S or F; and/or $0 < p \leq 0.2$, $0 < q \leq 0.2$, and $0 < p+q \leq 0.5$; and/or $0 < r \leq 1$; and/or $0 \leq s < 0.1$.

Optionally, the second material is the phase B belonging to the F-3m1 space group. In other words, the second material consists of the phase B. In this case, a chemical formula of the second material is $Li_2Ni_{1-p-q}M^2_pM^3_qO_{2-s}D_s$ (formula II-1). $M^2$, $M^3$, D, p, q, and s in formula II-1 are the same as those in formula II, which are not described herein again.

Alternatively, the second material includes at least two different phases, one of the phases being the phase B belonging to the F-3m1 space group. For example, the second material may include two, three, four, or five different phases.

Optionally, the second material includes two different phases, one of the phases being the phase B.

Optionally, the second material includes a phase A and a phase B; where the phase A belongs to an R-3m space group and exhibits a characteristic diffraction peak A of a (003) crystal plane at 17° to 19° in an X-ray diffraction pattern; and the phase B belongs to the F-3m1 space group and exhibits a characteristic diffraction peak B of a (001) crystal plane at 16° to 18° in the X-ray diffraction pattern.

Optionally, a relation between an intensity $I_A$ of the characteristic diffraction peak A and an intensity $I_B$ of the characteristic diffraction peak B is shown in formula III:

$$0 \leq I_A/I_B < 100 \qquad \text{formula III.}$$

Optionally, in the second material, the space group transitions from F-3m1 to R-3m after the phase B releases excess Li.

Optionally, a weight ratio of the first positive electrode material to the second material is (2-99):1.

Optionally, a weight ratio of the first positive electrode material to the second material is (3-99):1.

Optionally, the positive electrode further includes a binder, a conductive agent, and a solvent, where a percentage of the first positive electrode material in the positive electrode is 80wt% to 98wt%.

Specifically, when the positive electrode includes a current collector, the percentage of the first positive electrode material in the positive electrode is a percentage of the first positive electrode material in the remaining substance of the positive electrode excluding the current collector.

Optionally, a percentage of the first positive electrode material in the positive electrode is 85wt% to 98wt%.

Optionally, the positive electrode satisfies formula IV:

$$1.0 \leq R \cdot P/Q \leq 32 \qquad \text{formula IV,}$$

where
in formula IV, R represents a resistance of the positive electrode in $\Omega$; P represents a compacted density of the positive electrode in $g/cm^3$; and Q represents a single-sided surface density of the positive electrode in $g/1540.25 \ mm^2$.

Optionally, the positive electrode satisfies formula IV-1:

$$5.0 \leq R \cdot P/Q \leq 15 \qquad \text{formula IV-1;}$$

where R, P, and Q in formula IV-1 have the same meanings as those in formula IV.

Optionally, a resistance of the positive electrode satisfies $R \leq 3$.

Optionally, a resistance of the positive electrode satisfies $R \leq 1.5$.

Optionally, a compacted density P of the positive electrode satisfies $3.4 < P < 4.2$.

Optionally, a single-sided surface density Q of the positive electrode satisfies $0.16 < Q < 0.38$.

According to a second aspect of this application, a lithium-ion secondary battery is further provided. The lithium-ion secondary battery has the advantages of high energy density, good rate performance, and long cycle life. Specifically, the energy density of the battery is increased by selecting a first positive electrode material and a second material including a phase B. Through design of parameter conditions such as P, Q, and R of the positive electrode plate, a lithium-ion secondary battery with good rate performance and long cycle life is obtained.

The lithium-ion secondary battery includes a positive electrode, a negative electrode, a separator, and an electrolyte; where the positive electrode is selected from any one of the positive electrodes according to any one of the foregoing embodiments.

Optionally, the electrolyte includes fluoroethylene carbonate; where a percentage of the fluoroethylene carbonate in the electrolyte is m, m satisfying $0wt\% < m \leq 15wt\%$.

The electrolyte in the lithium-ion secondary battery of this application contains fluoroethylene carbonate, which can promote formation of a more uniform and dense SEI on the negative electrode during lithiation, reducing continuous consumption of active lithium, and further protecting the interface, thereby improving the cycle life.

According to a third aspect of this application, a preparation method of a positive electrode is further provided, where a first positive electrode material and a second material are mixed and then applied to obtain the positive electrode.

The second material is obtained through at least the following steps:

(a): obtaining a precursor a; where the precursor a includes any one of substances represented by formula V:

$$LiNi_{1-p-q}M^2_pM^3_qO_{2-s}D_s \qquad \text{formula V;}$$

where $M^2$, $M^3$, D, p, and q in formula V have the same meanings as those in formula II;
(b): preparing a solution a of a lithium-containing organic compound;

where the lithium-containing organic compound includes any one of lithium naphthalene, lithium diphenyl, or n-butyllithium; and
a solvent in the solution a is tetrahydrofuran or dimethoxyethane; and

(c) soaking the precursor a in the solution a for reacting to obtain a precipitate, where the precipitate is the second material.

Specifically, the preparation method of the second material includes:

first, preparing $LiNi_{1-p-q}M^2_pM^3_qO_{2-s}D_s$ using a traditional solid-phase sintering method,
second, preparing a tetrahydrofuran (or dimethoxyethane) solution of lithium naphthalene (lithium diphenyl or n-butyllithium) with a concentration of 0.2 M to 2 M,
third, soaking the $LiNi_{1-p-q}M^2_pM^3_qO_{2-s}D_s$ powder in step 1 in the solution prepared in step 2 for 3 min to 30 min, and
fourth, discarding a supernatant in step 3, washing a precipitate with a large amount of tetrahydrofuran (or dimethoxyethane) solvent, and drying the precipitate in a vacuum oven to obtain the second material.

This application includes the following beneficial effects:

(1) The positive electrode active substance in this application is a positive electrode lithiation material. The second material includes the phase B belonging to the F-3m1 space group and has high specific capacity. During initial charging, the phase B can release a large number of lithium ions to compensate for the loss of active lithium. In addition, the phase B undergoes a phase transition from the F-3m1 phase to the R-3m phase after releasing excess lithium, and thus serves as an active material in subsequent cycles.
The second material including the phase B has high initial charge specific capacity and low initial coulombic efficiency. Combining the second material with the first positive electrode material with high specific capacity, high discharge plateau, and high initial efficiency (that is, initial coulombic efficiency) achieves the effect of lithiation and increases the energy density. In addition, in the second material, only the phase B can provide an additional charge specific capacity, and the phase B undergoes a phase transition to the R-3m phase after releasing excess lithium, and thus serves as an active material in subsequent cycles, thereby further increasing the energy density.
(2) The second material used in this application can include the phase A and the phase B, where the phase A belongs to the R-3m space group and can be used as a positive electrode active material with high specific capacity, and the phase B with high specific capacity belongs to the F-3m1 space group. During initial charging, the phase B can release a large number of lithium ions for lithiation of the first positive electrode material, can undergo a phase transition to the R-3m phase after releasing lithium, and thus serves as an active material in subsequent cycles. This expands the application range of the second material.
(3) In this application, through design of the sheet resistance, compacted density, and surface density of the positive electrode plate, the cycle life and rate performance of the lithium-ion secondary battery can be significantly improved.

(4) In this application, the fluoroethylene carbonate additive being added to the electrolyte promotes formation of a LiF-rich and uniform and dense SEI film on the negative electrode, suppressing the continuous loss of active lithium. In addition, the fluoroethylene carbonate is more resistant to high-voltage oxidation on the positive electrode side, thereby further improving the cycle life of the lithium-ion secondary battery.

**BRIEF DESCRIPTION OF DRAWINGS**

To describe the technical solutions in embodiments of this application more clearly, the following briefly describes the accompanying drawings required for describing some embodiments. Apparently, the accompanying drawings in the following descriptions show merely some embodiments of this application, and persons of ordinary skill in the art may still derive other drawings from these accompanying drawings without creative efforts.

FIG. 1 is an XRD pattern of 1# second material $Li_{1.2}Ni_{0.8}Co_{0.1}Mn_{0.1}O_2$ used in a positive electrode in Example 1 of this application; and

FIG. 2 shows first-cycle charge and discharge curves of the 1# second material $Li_{1.2}Ni_{0.8}Co_{0.1}Mn_{0.1}O_2$ in Example 1 of this application.

**DESCRIPTION OF EMBODIMENTS**

To make the invention objectives, technical solutions, and beneficial technical effects of this application clearer, this application is further described below in detail with reference to embodiments. It should be understood that some embodiments described in this specification are merely intended to interpret this application rather than to limit the protection scope of the claims of this application, and the scope of this application is only defined by the appended claims and its equivalents. Any modifications, equivalent replacements, and improvements made without departing from the spirit and principle of this application shall fall within the protection scope of this application.

For example, the first positive electrode material and second material provided in this application can be directly mixed during slurry preparation, or the second material provided in this application can be separately prepared into a slurry and applied onto an upper layer or lower layer of the first positive electrode material.

In addition, for simplicity, only some numerical ranges are expressly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual value between endpoints of a range is included in the range. Therefore, each point or individual value may be used as its own lower limit or upper limit to be combined with any other point or individual value or combined with any other lower limit or upper limit to form a range not expressly recorded.

In the description of this specification, it should be noted that unless otherwise specified, "more than" and "less than" are inclusive of the present number. The term "SEI" in this application refers to a solid electrolyte interface.

"xx to xx" in this specification means that two end values are included. For example, "80wt% to 98wt%" means ≥ 80wt% and ≤ 98wt%.

In the prior art, $Li_2NiO_2$ lithiation materials are used, which have high specific capacity and simple preparation method and can well compensate for active lithium. However, such materials belong to an Immm space group and have an irreversible delithiation process, and inactive components remain on an electrode plate after delithiation during initial charging, which is not conducive to further increasing energy density of a battery. In addition, during initial charging, a large amount of active lithium is intercalated into a negative electrode, which further reduces a true potential of the negative electrode. Consequently, a solvent in an electrolyte continues to undergo reduction reactions at the negative electrode, resulting in a continuous increase in impedance, thereby affecting cycling performance.

To solve the problem in the prior art that a lithiation material has limited effect on increasing energy density of a battery, the inventor has found that due to an irreversible delithiation process of the lithiation material in the prior art, inactive components remain on an electrode plate after delithiation during initial charging. Therefore, this application provides a positive electrode active substance. The positive electrode active substance includes a first positive electrode material and a second material, and the second material includes a phase B belonging to an F-3m1 space group. Specifically, the phase B provides excess lithium for lithiation of the first positive electrode material (that is, for compensating for the loss of active lithium caused by formation of a SEI), increasing the energy density of the battery. In addition, the phase B undergoes a phase transition to an R-3m phase after releasing excess lithium, and thus can serve as an active material in subsequent cycles, thereby further increasing the energy density.

**Positive electrode (sometimes referred to as positive electrode plate in this specification):**

A first aspect of some embodiments of this application provides a positive electrode, including a positive electrode current collector and a positive electrode material layer disposed on at least one surface of the positive electrode current collector. In an example, the positive electrode current collector includes two back-to-back surfaces in a thickness direction of the positive electrode current collector, and the positive electrode material layer is stacked on either or both of the two surfaces of the positive electrode current collector.

The positive electrode material layer includes a positive electrode active substance, and the positive electrode active substance includes a first positive electrode material and a second material.

$$Li_{1+x}Co_{1-y}M^1{}_yO_{2-t}A_t \qquad \text{formula I,}$$

where

in formula I, $-0.1 \leq x \leq 0.2$, $0 \leq y \leq 0.2$, and $0 \leq t \leq 0.2$; $M^1$ is selected from at least one of Ni, Mn, Al, Mg, Ti, Zr, La, Y, Fe, Cr, V, Zn, Ru, Rh, Ga, Pd, Pt, Mo, W, Sb, Nb, Se, Te, or Ce; and A is selected from at least one of S, N, F, Cl, or Br; and

$$Li_{1+r}Ni_{1-p-q}M^2{}_pM^3{}_qO_{2-s}D_s \qquad \text{formula II,}$$

where

in formula II, $0 < r \leq 1$, $0 < p < 1$, $0 < q < 1$, $0 < p+q \leq 0.5$, and $0 \leq s < 0.2$; $M^2$ and $M^3$ are each independently selected from at least one of Co, Mn, Fe, Ti, Al, V, Cr, Nb, Zr, La, or Y; and D is selected from at least one of S, N, F, Cl, or Br; where the second material includes a phase B belonging to an F-3m1 space group.

In one possible example, the second material consists of the phase B.

In another possible example, the second material may include a phase A and a phase B; where the phase A belongs to an R-3m space group and exhibits a characteristic diffraction peak A of a (003) crystal plane at 17° to 19° in an X-ray diffraction pattern; and the phase B belongs to the F-3m1 space group and exhibits a characteristic diffraction peak B of a (001) crystal plane at 16° to 18° in the X-ray diffraction pattern. An intensity $I_A$ of the characteristic diffraction peak A and an intensity $I_B$ of the characteristic diffraction peak B satisfy formula III:

$$0 \leq I_A/I_B < 100 \qquad \text{formula III.}$$

In this application, the second material includes both the phase A and the phase B, increasing the energy density of the battery.

Further, technical parameters of the positive electrode plate satisfy $1.0 \leq R \cdot P/Q \leq 32$, where R represents a resistance of the positive electrode plate in $\Omega$; P represents a compacted density of the positive electrode plate in $g/cm^3$; and Q represents a single-sided surface density of the positive electrode plate in $g/1540.25\ mm^2$.

In this specification, the calculation of $R \cdot P/Q$ involves only numerical calculations. For example, if the resistance R of the positive electrode plate is 1.0 $\Omega$, the compacted density P is 4.0 $g/cm^3$, and the single-sided surface density Q of the positive electrode plate is 0.30 $g/1540.25\ mm^2$, then $R \cdot P/Q = 13.33$.

The resistance R of the positive electrode plate is a resistance value measured using a direct current two-probe method, where a contact area between probes and the positive electrode plate is $49\pi\ mm^2$. In an example, upper and lower sides of the positive electrode plate are clamped between two conductive terminals of an electrode plate resistance tester and are fixed by applying pressure, where a diameter of the conductive terminal is 14 mm and the applied pressure is 15 MPa to 27 MPa. The electrode plate resistance tester is HIOKI BT23562 internal resistance tester.

The compacted density of the positive electrode plate can be calculated according to the formula $P = m/v$, where in the formula, m is a weight of the positive electrode material layer in g; and v is a volume of the positive electrode material layer in $cm^3$. The volume v of the positive electrode material layer can be a product of an area $A_r$ of the positive electrode material layer and a thickness of the positive electrode material layer.

The single-sided surface density Q of the positive electrode plate can be calculated according to the formula $Q = 1540.25m/A_r$, where in the formula, m is a weight of the positive electrode material layer in g; and $A_r$ is an area of the positive electrode active material layer in $mm^2$.

The positive electrode plate of some embodiments of this application can give full play to the synergistic effect between the first positive electrode material and the second material. First, the second material used in this application can include the phase A and the phase B, where the phase A belongs to the R-3m space group and can be used as a positive electrode active material with high specific capacity, and the phase B belongs to the F-3m1 space group and has high specific capacity. During initial charging, the phase B can release a large number of lithium ions to compensate for the loss of active lithium, can undergo a phase transition to the R-3m phase after releasing lithium, and thus serves as an active material in subsequent cycles. Second, the first positive electrode material used in this application has high specific capacity, high discharge plateau, and high initial efficiency, and combined with the second material, can effectively increase the energy density of the battery. Third, in this application, through design of the sheet resistance, compacted density, and surface density of the electrode plate, the cycle life and rate performance of the lithium-ion secondary battery can be significantly improved. Fourth, the fluoroethylene carbonate additive being added to the electrolyte promotes formation of a LiF-rich and uniform and dense SEI film on the negative electrode, suppressing the continuous loss of active lithium. In addition, the fluoroethylene carbonate is more resistant to high-voltage oxidation on the positive electrode side, thereby further improving the cycle life of the lithium-ion secondary battery.

It should be noted that the sheet resistance, compacted density, and single-sided surface density of the positive electrode plate are the key parameters in the design and preparation of the lithium-ion secondary battery. An excessively large sheet resistance of the positive electrode plate affects the cycling performance and rate performance of the lithium-ion secondary battery. An excessively large or small compacted density deteriorates the cycling performance and rate performance of the battery. An excessively large single-sided surface density of the positive electrode plate reduces the cycle life of the battery and affects permeation of the electrolyte, affecting the rate performance of the battery, and especially decreasing the discharge capacity of the battery at a high rate. However, an excessively small single-sided surface density of the positive electrode plate means that the length of the current collector and separator increases under the same battery capacity, resulting in an increased ohmic resistance of the battery. This requires the comprehensive design of these parameters during preparation of the battery to ensure that the positive electrode plate achieves the expected design values, so as to allow the lithium-ion secondary battery to achieve desired electrochemical performance.

Further preferably, the technical parameters of the positive electrode plate should satisfy $5.0 \leq R \cdot P/Q \leq 15$. $R \cdot P/Q$ is designed mainly to further improve the cycle life and rate performance of the battery.

The sheet resistance R of the positive electrode plate preferably satisfies $R \leq 3$, and more preferably $R \leq 1.5$. This is conducive to improving the cycling performance and rate performance of the lithium-ion secondary battery.

The compacted density P of the positive electrode plate preferably satisfies $3.4 < P < 4.2$. This facilitates migration of electrons and ions in the positive electrode plate, thereby improving the cycling performance of the lithium-ion secondary battery.

The single-sided surface density Q of the positive electrode plate preferably satisfies $0.16 < Q < 0.38$. This can improve the cycling performance and rate performance of the lithium-ion secondary battery while guaranteeing the charge and discharge capacity.

In the positive electrode, a weight ratio of the first positive electrode material to the second material is preferably 2:1 to 99:1, and further preferably 3:1 to 99:1. The majority of such positive electrode plate is the first positive electrode material, which has higher structural stability, reducing capacity loss and impedance increase caused by structural damage of the positive electrode material, thereby maintaining cycling stability and kinetic performance.

The specific ratio of the first positive electrode material to the second material depends on initial efficiency and specific capacity of positive and negative electrodes of an applied system. The ratio should not be excessively large (an excessively small amount of second material), otherwise it is not sufficient to compensate for active lithium consumed by the SEI. The ratio should also not be excessively small (an excessively large amount of second material), otherwise active lithium is redundant and not fully utilized. In addition, the compacted density of the second material is small, so an excessively large amount added is not conducive to achieving greater volumetric energy density.

In the positive electrode, a weight percentage of the first positive electrode material is 80wt% to 98wt%, and more preferably 85wt% to 98wt%.

The positive electrode plate of some embodiments of this application may further include a conductive agent and a binder. The conductive agent and the binder are not limited to any specific type in this application, and may be selected according to actual needs.

In an example, the conductive agent may be one or more of graphite, superconducting carbon, acetylene black, carbon black, Ketjen black, carbon dots, carbon nanotubes, graphene, and carbon nanofiber; and the binder may be one or more of styrene-butadiene rubber (SBR), water-based acrylic resin (water based acrylic resin), carboxymethyl cellulose (CMC), polyvinylidene fluoride (PVDF), polytetrafluoroethylene (PTFE), polyvinyl butyral (PVB), ethylene-vinyl acetate copolymer (EVA), and polyvinyl alcohol (PVA).

In some optional embodiments, a weight percentage of the conductive agent in the positive electrode is greater than or equal to 0.5wt%, which is conducive to obtaining a low sheet resistance of the positive electrode. When the positive electrode includes a current collector, the percentage of the conductive agent in the positive electrode is a percentage of the conductive agent in the remaining substance of the positive electrode excluding the current collector.

In some optional embodiments, a weight percentage of the binder in the positive electrode is less than or equal to 2.0wt%, which is conducive to obtaining a low sheet resistance of the positive electrode. When the positive electrode includes a current collector, the percentage of the binder in the positive electrode is a percentage of the binder in the remaining substance of the positive electrode excluding the current collector.

The positive electrode current collector may be made of a metal foil material or a porous metal plate, for example, a foil material or porous plate made of metal such as aluminum, copper, nickel, titanium, or silver or alloys thereof, such as aluminum foil.

Thickness of the positive electrode current collector is preferably 5 $\mu$m to 20 $\mu$m, further preferably 6 $\mu$m to 18 $\mu$m, and more preferably 8 $\mu$m to 16 $\mu$m.

**Lithium-ion secondary battery:**

Another aspect of some embodiments of this application further provides a lithium-ion secondary battery, including a positive electrode, a negative electrode, a separator, and an electrolyte.

The positive electrode is the positive electrode plate according to the first aspect of some embodiments of this application.

The negative electrode may be a lithium metal plate or may include a negative electrode current collector and a negative electrode material layer disposed on at least one surface of the negative electrode current collector.

The negative electrode material layer generally includes a negative electrode material and an optional conductive agent, binder, and thickener. In an example, the negative electrode material may be one or more of natural graphite, artificial graphite, mesocarbon microbeads (MCMB), hard carbon, soft carbon, silicon, silicon-carbon composite, SiO, Li-Sn alloy, Li-Sn-O alloy, Sn, SnO, $SnO_2$, spinel-structured lithium titanate $Li_4Ti_5O_{12}$, Li-Al alloy, and metal lithium; the conductive agent may be one or more of graphite, superconducting carbon, acetylene black, carbon black, Ketjen black, carbon dots, carbon nanotubes, graphene, and carbon nanofiber; the binder may be one or more of styrene-butadiene rubber (SBR), polyvinylidene fluoride (PVDF), polytetrafluoroethylene (PTFE), polyvinyl butyral (PVB), water-based acrylic resin (water-based acrylic resin), and carboxymethyl cellulose (CMC); and the thickener may be carboxymethyl cellulose (CMC). However, this application is not limited to these materials, and this application may alternatively use other materials that can be used as a negative electrode material, conductive agent, binder, and thickener of a lithium-ion secondary battery.

The negative electrode current collector may be made of a material such as a metal foil material or a porous metal plate, for example, a foil material or porous plate made of metal such as copper, nickel, titanium, or iron or alloys thereof, such as copper foil.

The negative electrode plate may be prepared using a conventional method in the art. Generally, the negative electrode material and the optional conductive agent, binder, and thickener are dispersed in a solvent, where the solvent may be N-methylpyrrolidone (NMP) or deionized water, to form a uniform negative electrode slurry, and then the negative electrode slurry is applied onto the negative electrode current collector, followed by processes such as drying and cold pressing, to obtain a negative electrode plate.

The separator is not particularly limited, and may be any well-known porous separator with electrochemical stability and chemical stability, for example, a single-layer or multi-layer film made of one or more of glass fiber, non-woven fabric, polyethylene (PE), polypropylene (PP), and polyvinylidene fluoride (PVDF).

The electrolyte includes an organic solvent, an electrolytic lithium salt, and an additive. The organic solvent and electrolytic lithium salt are not limited to any specific type in this application, and may be selected according to actual needs.

In an example, the organic solvent may be one or more and preferably more than two of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), vinylene carbonate (VC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), and diethyl sulfone (ESE).

The electrolytic lithium salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), $LiPO_2F_2$ (lithium difluorophosphate), LiDFOP (lithium difluorobis(oxalato)phosphate), and LiTFOP (lithium tetrafluoro(oxalato)phosphate).

The electrolyte additive includes fluoroethylene carbonate (FEC). Based on a total weight of the electrolyte, a percentage of the fluoroethylene carbonate is 0wt% to 15wt%.

The electrolyte further optionally includes other additives. The additive may be any additive that can be used as an additive of a lithium-ion secondary battery, which is not specifically limited in this application, and may be selected according to actual needs. In an example, the additive may be one or more of vinylethylene carbonate (VEC), succinonitrile (SN), adiponitrile (AND), 1,3-propene sultone (PST), sulfonate cyclic quaternary ammonium salt, tris(trimethylsilyl) phosphate (TMSP), and tris(trimethylsilyl) borate (TMSB).

The electrolyte may be prepared using a conventional method in the art. The organic solvent, the electrolytic lithium salt, the fluoroethylene carbonate, and the other optional additives may be evenly mixed to obtain the electrolyte, where the materials are not limited to a particular addition order. For example, the electrolytic lithium salt, the fluoroethylene carbonate, and the other optional additives are added to the organic solvent and evenly mixed to obtain the electrolyte. The electrolytic lithium salt may be added to the organic solvent first, and then the fluoroethylene carbonate and the other optional additives are added to the organic solvent separately or simultaneously.

The positive electrode plate, the separator, and the negative electrode plate are stacked in sequence such that the separator is located between the positive electrode plate and the negative electrode plate for separation to obtain a battery cell, or the resulting stack is wound to obtain a battery cell; and the battery cell is placed in a packaging housing, the electrolyte is injected, and the housing is sealed, to obtain the lithium-ion secondary battery.

The positive electrode plate according to the first aspect of some embodiments of this application is used, so the lithium-ion secondary battery of this application has high energy density, cycling performance, and rate performance.

**Example**

All substances and materials used in some embodiments of this application are commercially available unless otherwise specified.

**Preparation method of second material**

(1) Preparation method of 1# second material $Li_{1.2}Ni_{0.8}Co_{0.1}Mn_{0.1}O_2$:

Step 1: $LiNi_{0.8}Co_{0.1}Mn_{0.1}O_2$ was prepared using a traditional solid-phase sintering method;
Step 2: a tetrahydrofuran solution of 0.5 M lithium naphthalene was prepared in a glove box (with both water and oxygen contents being less than 0.1 ppm): an appropriate amount of tetrahydrofuran was poured into a container, then an appropriate amount of powder naphthalene was weighed and poured into the container, a lithium plate was cut into pieces and slowly put into the container, and the mixture was stirred for 5 minutes;
Step 3: 9.728 g of the foregoing $LiNi_{0.8}Co_{0.1}Mn_{0.1}O_2$ powder in step 1 was weighed and soaked in 40 ml of the solution prepared in step 2 for 5 minutes; and
Step 4: a supernatant in step 3 was discarded, a precipitate was washed with a large amount of tetrahydrofuran solvent, and the precipitate was dried in a vacuum oven at 80°C for 5 minutes to obtain a sample, which was denoted as 1# second material.

(2) Preparation method of 2# second material $Li_{1.2}Ni_{0.8}Co_{0.08}Mn_{0.1}Al_{0.02}O_2$ was similar to that of 1# second material except that $LiNi_{0.8}Co_{0.08}Mh_{0.1}Al_{0.02}O_2$ was prepared using the traditional solid-phase sintering method in step 1, and that the mass of the powder in step 3 was 9.664 g.

(3) Preparation method of 3# second material $Li_{1.2}Ni_{0.8}Co_{0.1}Mn_{0.1}O_{1.95}F_{0.05}$ was similar to that of 1# second material except that $LiNi_{0.8}Co_{0.1}Mn_{0.1}O_{1.95}F_{0.05}$ was prepared using the traditional solid-phase sintering method in step 1, and that the mass of the powder in step 3 was 9.743 g.

(4) Preparation method of 5# second material $Li_{1.2}Ni_{0.8}Co_{0.1}Mn_{0.1}O_{1.9}S_{0.05}F_{0.05}$ was similar to that of 1# second material except that $LiNi_{0.8}Co_{0.1}Mn_{0.1}O_{1.9}S_{0.05}F_{0.05}$ was prepared using the traditional solid-phase sintering method in step 1, and that the mass of the powder in step 3 was 9.823 g.

(5) Preparation method of 6# second material $Li_{1.2}Ni_{0.5}Co_{0.3}Mn_{0.2}O_2$ was similar to that of 1# second material except that $LiNi_{0.5}Co_{0.3}Mn_{0.2}O_2$ was prepared using the traditional solid-phase sintering method in step 1, and that the mass of the powder in step 3 was 9.695 g.

(6) Preparation method of 7# second material $Li_2Ni_{0.8}Co_{0.1}Mn_{0.1}O_2$ was similar to that of 1# second material except that $LiNi_{0.8}Co_{0.1}Mn_{0.1}O_2$ was prepared using the traditional solid-phase sintering method in step 1, and that the volume of the solution in step 3 was 200 ml.

**XRD test of second material:**

The 1# to 7# second materials were subjected to the XRD test separately, and the test results showed that the 1# to 7# second materials all included the phase A and the phase B.

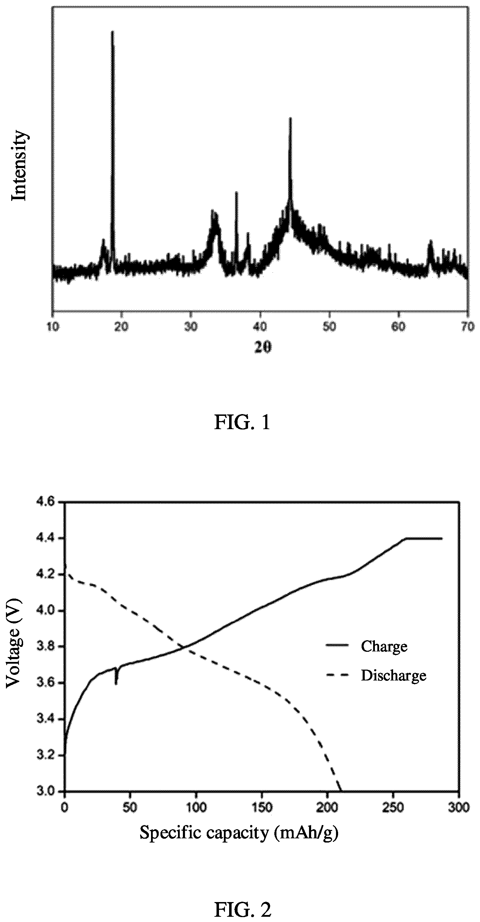

The 1# second material $Li_{1.2}Ni_{0.8}Co_{0.1}Mn_{0.1}O_2$ was used as a typical example, and its XRD data was shown in FIG. 1. It can be learned from FIG. 1 that $Li_{1.2}Ni_{0.8}Co_{0.1}Mn_{0.1}O_2$ exhibited the characteristic diffraction peak A of the (003) crystal plane around 18.7° and the characteristic diffraction peak B of the (001) crystal plane around 17.4°, so the 1# second material included the phase A and the phase B, where the chemical formula of A was $LiNi_{0.8}Co_{0.1}Mn_{0.1}O_2$ and the chemical formula of B was $Li_2Ni_{0.8}Co_{0.1}Mn_{0.1}O_2$, and the ratio $I_A/I_B$ of the intensity $I_A$ of the characteristic diffraction peak A to the intensity $I_B$ of the characteristic diffraction peak B was 8.1.

**First-cycle charging and discharging performance test of second material:**

Test method: At 45°C, the lithium-ion secondary battery was charged to 4.4 V at a constant current of 0.1C, then charged to a current less than or equal to 0.025C at a constant voltage, and discharged to 3.0 V at a constant current of 0.1C. Charge and discharge curves of the battery were recorded.

The test results showed that the 1# to 7# second materials all had high initial charge specific capacity and low initial coulombic efficiency. The 1# second material was used as a typical example, and its first-cycle charging and discharging performance was shown in FIG. 2. It can be learned that the 1# second material had high initial charge specific capacity and low initial coulombic efficiency.

**Example 1:**

Preparation of positive electrode plate: A first positive electrode material $LiCoO_2$, a second material $Li_{1.2}Ni_{0.8}Co_{0.1}Mn_{0.1}O_2$, a binder PVDF, and conductive carbon black were mixed, where a weight ratio of $LiCoO_2$, $Li_{1.2}Ni_{0.8}Co_{0.1}Mn_{0.1}O_2$, PVDF, and conductive carbon black was 87.6:10.0:1.3:1.1, a solvent NMP was added, and the mixture was stirred to a uniform transparent system under the action of vacuum stirring to obtain a positive electrode slurry; and the positive electrode slurry was uniformly applied onto a positive electrode current collector aluminum foil, and then transferred to an oven for drying at 120°C, followed by cold pressing and cutting, to obtain a positive electrode plate. A weight percentage of the first positive electrode material $LiCoO_2$ in the positive electrode material layer was 87.6%, and a weight percentage of the second material $Li_{1.2}Ni_{0.8}Co_{0.1}Mn_{0.1}O_2$ in the positive electrode material layer was 10.0%.

Preparation of negative electrode plate: A negative electrode active material artificial graphite, silicon monoxide, a binder polyacrylic acid (PAA, with a molecular weight of $1 \times 10^3$ to $1 \times 10^6$), and conductive carbon black were mixed at a mass ratio of 85.9:10:2.8:1.3%, a solvent deionized water was added, and the mixture was stirred by a vacuum stirrer to obtain a negative electrode slurry; and the negative electrode slurry was uniformly applied onto a negative electrode current collector copper foil, and then transferred to an oven for drying at 120°C, followed by cold pressing and cutting, to obtain a negative electrode plate.

Preparation of electrolyte: Ethylene carbonate (EC), ethyl methyl carbonate (EMC), and diethyl carbonate (DEC) were evenly mixed at a volume ratio of 1:1:1 to obtain an organic solvent. 1 mol/L $LiPF_6$ was dissolved in the organic solvent, then 5wt% fluoroethylene carbonate was added based on a total mass of an electrolyte, and the mixture was evenly mixed to obtain the electrolyte.

Preparation of lithium-ion secondary battery: The positive electrode plate, the separator, and the negative electrode plate were stacked sequentially, where the separator was a 14 $\mu$m thick polypropylene (PP) film (provided by Celgard), such that the separator was located between the positive electrode plate and the negative electrode plate for separation. Then, the resulting stack was wound to form an electrode assembly. After tabs were welded, the bare cell was placed in a housing, the electrolyte was injected, and the housing was sealed, followed by processes such as standing, formation, and shaping, to obtain a lithium-ion secondary battery.

**Examples 2 to 17:**

Different from Example 1, the material components in the positive electrode and the related parameters in the preparation steps were adjusted. See Table 1 for details.

**Comparative Example 1**

Different from Example 1, the positive electrode included only $LiCoO_2$. See Table 1 for details.

**Comparative Example 2**

Different from Example 1, the positive electrode included only $Li_{1.2}Ni_{0.8}Co_{0.1}Mn_{0.1}O_2$. See Table 1 for details.

### Comparative Example 3

Different from Example 1, the second material in the positive electrode included no phase B. See Table 1 for details.

### Comparative Examples 4 and 5;

The weight ratio of the first positive electrode material to the second material in the positive electrode was different from that in Example 1. See Table 1 for details.

### Comparative Examples 6 and 7;

The sheet resistance, compacted density, and single-sided surface density of the positive electrode plate were different from those in Example 1. See Table 1 for details.

### Comparative Examples 8 and 9;

The weight percentage of the fluoroethylene carbonate in the electrolyte was different from that in Example 1. See Table 1 for details.

### Sheet resistance test of positive electrode plate

The sheet resistance of the positive electrode plate was measured using a HIOKI BT3562 resistance tester, including the following processes: the positive electrode plate was clamped between two conductive terminals of the internal resistance tester and was fixed by applying pressure to measure the resistance R of the positive electrode plate, where a diameter of the conductive terminal was 14 mm, the applied pressure was 15 MPa to 27 MPa, and the sampling time ranged from 5s to 17s. See Table 1 for the detailed test results.

### High-temperature cycling performance test of lithium-ion secondary battery

At 45°C, the lithium-ion secondary battery was charged to 4.4 V at a constant current of 1.5C, then charged to a current less than or equal to 0.05C at a constant voltage, and discharged to 3.0 V at a constant current of 1C. This was one charge and discharge cycle, and a discharge capacity of the lithium-ion secondary battery after the first cycle was recorded. The lithium-ion secondary battery was subjected to charge and discharge cycles using the foregoing method, a discharge capacity after each cycle was recorded until the discharge capacity of the lithium-ion secondary battery decayed to 80% of the discharge capacity after the first cycle, and the number of charge and discharge cycles was recorded. See Table 2 for the detailed test results.

### Rate performance test of lithium-ion secondary battery

At 25°C, the lithium-ion secondary battery was charged to 4.4 V at a constant current of 0.2C, then charged to a current less than or equal to 0.05C at a constant voltage, and discharged to 3.0 V at a constant current of 0.2C. A discharge capacity at 0.2C was recorded.

At 25°C, the lithium-ion secondary battery was charged to 4.4 V at a constant current of 0.2C, then charged to a current less than or equal to 0.05C at a constant voltage, and discharged to 3.0 V at a constant current of 2C. A discharge capacity at 2C was recorded.

Discharge capacity retention rate of lithium-ion secondary battery at 2C (%) = discharge capacity at 2C/discharge capacity at 0.2C × 100%. See Table 2 for the detailed test results.

**Table 1 Weight percentage of positive electrode material in positive electrode plate, sheet resistance, compacted density, and single-sided surface density of positive electrode plate, and percentage of fluoroethylene carbonate in electrolyte in comparative examples and examples**

| Type | Positive electrode active material | Weight percentage of first positive electrode material (wt%) | Weight percentage of second material (wt%) | Sheet resistance R of positive electrode plate ($\Omega$) | Compacted density P of positive electrode plate ($g/cm^3$) | Single-sided surface density Q of positive electrode plate (g/ 1540.25 $mm^2$) | Weight percentage of fluoroethylene carbonate (%) |
|---|---|---|---|---|---|---|---|
| Comparative Example 1 | $LiCoO_2$ | 97.6 | / | 0.5 | 4.15 | 0.26 | 5 |
| Comparative Example 2 | $Li_{1.2}Ni_{0.8}Co_{0.1}Mn_{0.1}O_2$ | / | 97.6 | 0.5 | 3.5 | 0.26 | 5 |
| Comparative Example 3 | $LiCoO_2/$ $LiNi_{0.8}Co_{0.1}Mn_{0.1}O_2$ | 87.6 | 10.0 | 0.5 | 4.15 | 0.26 | 5 |
| Comparative Example 4 | $LiCoO_2/Li_{1.2}Ni_{0.8}Co_{0.1}Mn_{0.1}O_2$ | 97.0 | 0.6 | 0.5 | 4.15 | 0.26 | 5 |
| Comparative Example 5 | $LiCoO_2/Li_{1.2}Ni_{0.8}Co_{0.11}Mn_{0.1}O_2$ | 57.6 | 40.0 | 0.5 | 4.15 | 0.26 | 5 |
| Comparative Example 6 | $LiCoO_2/Li_{1.2}Ni_{0.8}Co_{0.11}Mn_{0.1}O_2$ | 87.6 | 10.0 | 3.5 | 3.9 | 0.20 | 5 |
| Comparative Example 7 | $LiCoO_2/Li_{1.2}Ni_{0.8}Co_{0.11}Mn_{0.1}O_2$ | 87.6 | 10.0 | 0.1 | 3.4 | 0.40 | 5 |
| Comparative Example 8 | $LiCoO_2/Li_{1.2}Ni_{0.8}Co_{0.11}Mn_{0.1}O_2$ | 87.6 | 10.0 | 0.5 | 4.15 | 0.26 | 0 |
| Comparative Example 9 | $LiCoO_2/Li_{1.2}Ni_{0.8}Co_{0.11}Mn_{0.1}O_2$ | 87.6 | 10.0 | 0.5 | 4.15 | 0.26 | 20 |
| Example 1 | $LiCoO_2/Li_{1.2}Ni_{0.8}Co_{0.1}Mn_{0.1}O_2$ | 87.6 | 10.0 | 0.5 | 4.15 | 0.26 | 5 |
| Example 2 | $LiCo_{0.9}Ni_{0.1}O_2/Li_{1.2}Ni_{0.8}Co_{0.1}Mn_{0.1}O_2$ | 87.6 | 10.0 | 0.5 | 4.15 | 0.26 | 5 |

(continued)

| Type | Positive electrode active material | Weight percentage of first positive electrode material (wt%) | Weight percentage of second material (wt%) | Sheet resistance R of positive electrode plate ($\Omega$) | Compacted density P of positive electrode plate (g/cm$^3$) | Single-sided surface density Q of positive electrode plate (g/ 1540.25 mm$^2$) | Weight percentage of fluoroethylene carbonate (%) |
|---|---|---|---|---|---|---|---|
| Example 3 | $LiCo_{0.9}Ni_{0.05}Mn_{0.05}O_2/Li_{1.2}Ni_{0.8}Co_{0.1}Mn_{0.1}O_2$ | 87.6 | 10.0 | 0.5 | 4.15 | 0.26 | 5 |
| Example 4 | $Li_{0.95}Co_{0.99}Al_{0.01}O_{1.95}F_{0.05}/Li_{1.2}Ni_{0.8}Co_{0.1}Mn_{0.1}O_2$ | 87.6 | 10.0 | 0.5 | 4.15 | 0.26 | 5 |
| Example 5 | $LiCoO_2/Li_{1.2}Ni_{0.8}Co_{0.08}Mn_{0.1}Al_{0.02}O_2$ | 87.6 | 10.0 | 0.5 | 4.15 | 0.26 | 5 |
| Example 6 | $LiCoO_2/Li_{1.2}Ni_{0.8}Co_{0.1}Mn_{0.1}O_{1.95}F_{0.05}$ | 87.6 | 10.0 | 0.5 | 4.15 | 0.26 | 5 |
| Example 7 | $LiCoO_2/Li_{1.2}Ni_{0.8}Co_{0.1}Mn_{0.1}O_{1.9}S_{0.05}F_{0.05}$ | 87.6 | 10.0 | 0.5 | 4.15 | 0.26 | 5 |
| Example 8 | $LiCoO_2/Li_{1.2}Ni_{0.5}Co_{0.3}Mn_{0.2}O_2$ | 87.6 | 10.0 | 0.5 | 4.15 | 0.26 | 5 |
| Example 9 | $LiCoO_2/Li_2Ni_{0.8}Co_{0.1}Mn_{0.1}O_2$ | 87.6 | 10.0 | 0.5 | 4.15 | 0.26 | 5 |
| Example 10 | $LiCoO_2/Li_{1.2}Ni_{0.8}Co_{0.1}Mn_{0.1}O_2$ | 90.6 | 7.0 | 0.5 | 4.15 | 0.26 | 5 |
| Example 11 | $LiCoO_2/Li_{1.2}Ni_{0.8}Co_{0.1}Mn_{0.1}O_2$ | 77.6 | 20.0 | 0.5 | 3.8 | 0.26 | 5 |
| Example 12 | $LiCoO_2/Li_{1.2}Ni_{0.8}Co_{0.1}Mn_{0.1}O_2$ | 87.6 | 10.0 | 0.4 | 4.0 | 0.36 | 5 |
| Example 13 | $LiCoO_2/Li_{1.2}Ni_{0.8}Co_{0.1}Mn_{0.1}O_2$ | 87.6 | 10.0 | 1.5 | 3.8 | 0.28 | 5 |

| Type | Positive electrode active material | Weight percentage of first positive electrode material (wt%) | Weight percentage of second material (wt%) | Sheet resistance R of positive electrode plate ($\Omega$) | Compacted density P of positive electrode plate (g/cm$^3$) | Single-sided surface density Q of positive electrode plate (g/ 1540.25 mm$^2$) | Weight percentage of fluoroethylene carbonate (%) |
|---|---|---|---|---|---|---|---|
| Example 14 | $LiCoO_2/Li_{1.2}Ni_{0.8}Co_{0.1}Mn_{0.1}O_2$ | 87.6 | 10.0 | 0.5 | 4.15 | 0.26 | 3 |
| Example 15 | $LiCoO_2/Li_{1.2}Ni_{0.8}Co_{0.1}Mn_{0.1}O_2$ | 87.6 | 10.0 | 0.5 | 4.15 | 0.26 | 15 |
| Example 16 | $LiCo_{0.94}La_{0.02}Ti_{0.03}O_2/Li_{1.2}Ni_{0.8}Co_{0.1}Mn_{0.1}O_2$ | 87.6 | 10.0 | 0.5 | 4.15 | 0.26 | 5 |
| Example 17 | $LiCo_{0.93}Y_{0.02}V_{0.03}O_2/Li_{1.2}Ni_{0.8}Co_{0.1}Mn_{0.1}O_2$ | 87.6 | 10.0 | 0.5 | 4.15 | 0.26 | 5 |

EP 4 421 905 A1

**Table 2 High-temperature cycling performance and rate performance of lithium-ion secondary battery in comparative examples and examples**

| Type | R·P/Q | Cycles at high temperature | Rate performance (%) | Energy density (WHAL) |
|---|---|---|---|---|
| Comparative Example 1 | 7.98 | 384 | 94.5 | 750 |
| Comparative Example 2 | 6.73 | 322 | 98.2 | 692 |
| Comparative Example 3 | 7.98 | 343 | 95.3 | 712 |
| Comparative Example 4 | 7.98 | 392 | 95.8 | 754 |
| Comparative Example 5 | 7.98 | 331 | 94.3 | 726 |
| Comparative Example 6 | 68.25 | 308 | 93.7 | 641 |
| Comparative Example 7 | 0.85 | 281 | 93.6 | 722 |
| Comparative Example 8 | 7.98 | 276 | 95.1 | 747 |
| Comparative Example 9 | 7.98 | 425 | 94.8 | 745 |
| Example 1 | 7.98 | 475 | 96.9 | 778 |
| Example 2 | 7.98 | 463 | 96.9 | 780 |
| Example 3 | 7.98 | 488 | 97.1 | 782 |
| Example 4 | 7.98 | 483 | 97.0 | 776 |
| Example 5 | 7.98 | 469 | 96.8 | 773 |
| Example 6 | 7.98 | 481 | 97.0 | 777 |
| Example 7 | 7.98 | 486 | 97.0 | 780 |
| Example 8 | 7.98 | 459 | 97.4 | 773 |
| Example 9 | 7.98 | 542 | 97.1 | 790 |
| Example 10 | 7.98 | 461 | 96.8 | 769 |
| Example 11 | 7.31 | 431 | 97.5 | 762 |
| Example 12 | 4.44 | 420 | 95.0 | 794 |
| Example 13 | 20.36 | 419 | 96.1 | 766 |
| Example 14 | 7.98 | 451 | 97.1 | 779 |
| Example 15 | 7.98 | 506 | 96.7 | 776 |

As can be seen from Table 2, (a) it can be learned from the comparison between Example 1 and Comparative Examples 1, 2, and 3 that when the second material is added to the first positive electrode material and the second material includes the phase B, the energy density can be increased, and the cycling performance and rate performance can also be improved.

(b) In Comparative Examples 4 and 5, the weight ratio of the first positive electrode material to the second material in Example 1 is adjusted. It can be learned from the comparison between Comparative Examples 4 and 5 and Example 1 that the appropriate weight ratio of the first positive electrode material to the second material can increase the energy density, and the appropriate ratio can also improve the cycling performance and the rate performance. If an excessively large amount of second material is added, the lithium sources are surplus, leading to a loss in the overall energy density, as shown in Comparative Example 5.

(c) In Comparative Examples 6 and 7, the values of P, Q, and R in Example 1 are adjusted to make R•P/Q different. It can be learned from the comparison between Comparative Examples 6 and 7 and Example 1 that the high-temperature cycling performance decreases from 475 in Example 1 to 308 and 281, the rate performance decreases from 96.9% to 93.7% and 93.6%, and the energy density decreases from 778 WhIL to 641 Wh/L and 722 Wh/L. This indicates that the appropriate value range of R•P/Q can improve the high-temperature cycling performance and the rate performance and increase the energy density.

(d) In Comparative Examples 8 and 9, the weight percentage of the fluoroethylene carbonate in the electrolyte in Example 1 is adjusted. It can be learned from the comparison between Comparative Examples 8 and 9 and Example 1 that the number of cycles at high temperature decreases from 475 in Example 1 to 276 and 425. This indicates that the appropriate percentage of the fluoroethylene carbonate is conducive to improving the cycling performance and the rate performance and increasing the energy density.

(e) It can be learned from the comparison between Examples 12 and 13 and Examples 1, 10, 11, 14, and 15 that R•P/Q being 5 to 15 (for example, 7.31 and 7.98) has better high-temperature cycling performance and rate performance than R•P/Q being 1 to 32 (for example, 4.44 and 20.36), so R•P/Q being 5 to 15 is the more preferable range.

(f) The second material in Example 9 consists of the phase B. This indicates that the second material consisting of the phase B can achieve high energy density, cycling performance, and rate performance.

It can be learned from the examples and comparative examples that the combination of the first positive electrode material and the second material generates a synergistic effect. First, the second material used in this application has a small content of free lithium on the surface, and when it is added to the positive electrode, the obtained slurry has good stability and good processability. Second, the second material used in this application has high initial charge specific capacity and low initial efficiency, which can better compensate for the loss of active lithium caused by the formation of the SEI. During discharging, more lithium ions are intercalated into the lattice of the first positive electrode material, effectively increasing the energy density of the lithium-ion secondary battery. Third, the first positive electrode material has good cycling performance and high specific capacity. Controlling the sheet resistance R, compacted density P, and single-sided surface density Q of the positive electrode plate within the ranges of this application can allow the lithium-ion secondary battery to have good cycling performance and rate performance. Fourth, the fluoroethylene carbonate added to the electrolyte and the lithiation strategy can generate a synergistic effect. During initial charging, a large amount of active lithium released from the second material is intercalated into the negative electrode. This further reduces the true potential of the negative electrode, resulting in the continuous reduction of the solvent in the electrolyte, thereby affecting the cycling performance. The fluoroethylene carbonate additive falling within the range of this application being used can facilitate the formation of a denser and thinner SEI layer, which prevents the continuous consumption of the electrolyte. In addition, the fluoroethylene carbonate is more resistant to high-voltage oxidation and thus is more conducive to being combined with the high-voltage first positive electrode material.

The foregoing embodiments are merely described as preferred embodiments of this application, and do not limit the scope of this application. Various modifications and improvements made by persons of ordinary skill in the art to the technical solutions of this application without departing from the design spirit of this application shall fall within the protection scope determined by the claims of this application.

**Claims**

1. A positive electrode, wherein the positive electrode comprises a first positive electrode material and a second material;

the first positive electrode material comprising any one of substances represented by formula I:

$$Li_{1+x}Co_{1-y}M^1_yO_{2-t}A_t \qquad \text{formula I,}$$

wherein
in formula I, $M^1$ comprises at least one of Ni, Mn, Al, Mg, Ti, Zr, La, Y, Fe, Cr, V, Zn, Ru, Rh, Ga, Pd, Pt, Mo, W, Sb, Nb, Se, Te, or Ce;
A comprises at least one of S, N, F, Cl, or Br; and
$-0.1 \leq x \leq 0.2$, $0 \leq y \leq 0.2$, and $0 \leq t \leq 0.2$; and
the second material comprising any one of substances represented by formula II:

$$Li_{1+r}Ni_{1-p-q}M^2_pM^3_qO_{2-s}D_s \qquad \text{formula II,}$$

wherein
in formula II, $M^2$ and $M^3$ independently comprise at least one of Co, Mn, Fe, Ti, Al, V, Cr, Nb, Zr, La, or Y, and $M^2$ and $M^3$ are different elements;
D comprises at least one of S, N, F, Cl, or Br; and

$$0 < r \leq 1, \, 0 < p < 1, \, 0 < q < 1, \, 0 < p+q \leq 0.5, \text{ and } 0 \leq s < 0.2;$$

wherein the second material comprises a phase B belonging to an F-3m1 space group.

2.  The positive electrode according to claim 1, wherein in the first positive electrode material, $M^1$ comprises at least one of Ni, Mn, Al, Mg, Ti, Zr, La, Y, Fe, Cr, V, Zn, or Rh; and/or
A comprises at least one of S or F; and/or

$$-0.05 \leq x \leq 0.1;$$

and/or

$$0 \leq y \leq 0.1.$$

3.  The positive electrode according to claim 1, wherein in the second material, $M^2$ and $M^3$ independently comprise at least one of Co, Mn, or Al; and/or
D comprises at least one of S or F; and/or

$$0 < p \leq 0.2, \, 0 < q \leq 0.2, \text{ and } 0 < p+q \leq 0.5;$$

and/or

$$0 < r \leq 1;$$

and/or

$$0 \leq s < 0.1.$$

4.  The positive electrode according to claim 1, wherein the second material is the phase B belonging to the F-3m1 space group; or
the second material comprises at least two different phases, one of the phases being the phase B belonging to the F-3m1 space group.

5.  The positive electrode according to claim 4, wherein the second material comprises two different phases, one phase being a phase A and the other phase being a phase B; wherein

the phase A belongs to an R-3m space group and exhibits a characteristic diffraction peak A of a (003) crystal plane at 17° to 19° in an X-ray diffraction pattern; and
the phase B belongs to the F-3m1 space group and exhibits a characteristic diffraction peak B of a (001) crystal plane at 16° to 18° in the X-ray diffraction pattern.

6.  The positive electrode according to claim 5, wherein a relation between an intensity $I_A$ of the characteristic diffraction peak A and an intensity $I_B$ of the characteristic diffraction peak B is shown in formula III:

$$0 \leq I_A/I_B < 100 \qquad \text{formula III.}$$

7. The positive electrode according to claim 1, wherein the positive electrode satisfies at least one of the following characteristics:

a: in the second material, the space group transitions from F-3m1 to R-3m after the phase B releases excess Li;
b: a weight ratio of the first positive electrode material to the second material is (2-99):1; or
c: a weight ratio of the first positive electrode material to the second material is (3-99): 1.

8. The positive electrode according to claim 1, wherein the positive electrode satisfies at least one of the following characteristics:

i: the positive electrode further comprises a binder, a conductive agent, and a solvent, wherein a percentage of the first positive electrode material in the positive electrode is 80wt% to 98wt%;
ii: a percentage of the first positive electrode material in the positive electrode is 85wt% to 98wt%;
iii: the positive electrode satisfies formula IV:

$$1.0 \leq R \bullet P/Q \leq 32 \qquad \text{formula IV,}$$

wherein
in formula IV, R represents a resistance of the positive electrode in $\Omega$;
P represents a compacted density of the positive electrode in $g/cm^3$; and
Q represents a single-sided surface density of the positive electrode in $g/1540.25 \ mm^2$;
iv: the positive electrode satisfies formula IV-1:

$$5.0 \leq R \bullet P/Q \leq 15 \qquad \text{formula IV-1;}$$

wherein R, P, and Q in formula IV-1 have the same meanings as those in formula IV;
v: a resistance of the positive electrode satisfies $R \leq 3$;
vi: a resistance of the positive electrode satisfies $R \leq 1.5$;
vii: a compacted density P of the positive electrode satisfies $3.4 < P < 4.2$; or
viii: a single-sided surface density Q of the positive electrode satisfies $0.16 < Q < 0.38$.

9. A lithium-ion secondary battery, wherein the lithium-ion secondary battery comprises a positive electrode, a negative electrode, a separator, and an electrolyte; wherein

the positive electrode is selected from any one of the positive electrodes according to any one of claims 1 to 8; and
the electrolyte comprises fluoroethylene carbonate; wherein
a percentage of the fluoroethylene carbonate in the electrolyte is m, m satisfying $0wt\% < m \leq 15wt\%$.

10. A preparation method of the positive electrode according to claim 1, wherein the first positive electrode material and the second material are mixed and then applied to obtain the positive electrode; wherein
the second material is obtained through at least the following steps:

(a): obtaining a precursor a; wherein the precursor a comprises any one of substances represented by formula V:

$$LiNi_{1-p-q}M^2_pM^3_qO_{2-s}D_s \qquad \text{formula V;}$$

wherein
$M^2$, $M^3$, D, p, and q in formula V have the same meanings as those in formula II;
(b): preparing a solution a of a lithium-containing organic compound;

wherein the lithium-containing organic compound comprises any one of lithium naphthalene, lithium diphenyl, or n-butyllithium; and
a solvent in the solution a is tetrahydrofuran or dimethoxyethane; and

(c) soaking the precursor a in the solution a for reacting to obtain a precipitate, wherein the precipitate is the second material.

FIG. 1

FIG. 2

## INTERNATIONAL SEARCH REPORT

| | International application No. |
|---|---|
| | **PCT/CN2021/131284** |

**A. CLASSIFICATION OF SUBJECT MATTER**

H01M 4/36(2006.01)i; H01M 4/525(2010.01)i; H01M 4/131(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 正极, 阴极, 第一, 第二, 补锂, 预锂化, F-3ml, 空间群, 萘锂, positive electrode, cathode, first, second, lithium supplement, pre-lithiation, space group, lithium naphthalene

**C. DOCUMENTS CONSIDERED TO BE RELEVANT**

| Category* | Citation of document, with indication, where appropriate, of the relevant passages | Relevant to claim No. |
|---|---|---|
| Y | CN 102569878 A (SONY CORP.) 11 July 2012 (2012-07-11)<br>description, paragraphs 35-130 and 168-195 | 1-10 |
| Y | CN 112382749 A (HUAZHONG UNIVERSITY OF SCIENCE AND TECHNOLOGY) 19 February 2021 (2021-02-19)<br>description, paragraphs 3-45 | 1-10 |
| Y | CN 110265627 A (NINGDE CONTEMPORARY AMPEREX TECHNOLOGY CO., LTD.) 20 September 2019 (2019-09-20)<br>description, paragraphs [0004]-[0044] | 8, |
| Y | KR 20170142024 A (LG CHEMICAL LTD.) 27 December 2017 (2017-12-27)<br>description, paragraphs 20-111 | 1-10 |
| Y | US 2020313157 A1 (UCHICAGO ARGONNE L.L.C.) 01 October 2020 (2020-10-01)<br>description, paragraphs 9-36, 73-130, and 148-157 | 1-10 |
| A | KR 20120083251 A (LG CHEMICAL LTD.) 25 July 2012 (2012-07-25)<br>entire document | 1-10 |

☐ Further documents are listed in the continuation of Box C. ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 June 2022** | **11 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/131284**

| Patent document cited in search report | | | Publication date (day/month/year) | Patent family member(s) | | | Publication date (day/month/year) |
|---|---|---|---|---|---|---|---|
| CN | 102569878 | A | 11 July 2012 | JP | 2012142156 | A | 26 July 2012 |
| | | | | US | 2012164533 | A1 | 28 June 2012 |
| | | | | US | 9077036 | B2 | 07 July 2015 |
| | | | | CN | 102569878 | B | 14 December 2016 |
| CN | 112382749 | A | 19 February 2021 | None | | | |
| CN | 110265627 | A | 20 September 2019 | WO | 2020063371 | A1 | 02 April 2020 |
| | | | | EP | 3680965 | A1 | 15 July 2020 |
| | | | | US | 2020388829 | A1 | 10 December 2020 |
| | | | | CN | 110265627 | B | 29 September 2020 |
| | | | | US | 11196041 | B2 | 07 December 2021 |
| KR | 20170142024 | A | 27 December 2017 | KR | 102172153 | B1 | 30 October 2020 |
| US | 2020313157 | A1 | 01 October 2020 | None | | | |
| KR | 20120083251 | A | 25 July 2012 | None | | | |

Form PCT/ISA/210 (patent family annex) (January 2015)